# FASCICULE DE BREVET EUROPEEN

(11) **EP 0 755 843 B1**
(45) Date de publication et mention de la délivrance du brevet: **24.03.1999**
(21) Numéro de dépôt: 96401669.5
(22) Date de dépôt: 25.07.1996
(51) Int. Cl.: B62D 1/18

(54) **Colonne de direction réglable en profondeur, avec dispositif de guidage**
Höhenverstellbare Lenksäule mit Führungseinrichtung
Reach adjustable steering column with guiding device

(30) Priorité: 26.07.1995 FR 9509110
(43) Date de publication de la demande: 29.01.1997
(73) Titulaire: LEMFORDER NACAM S.A., 41100 Vendome (FR)
(72) Inventeur: Fevre, Laurent, 41000 Saint-Sulpice (FR); Bodin, Jean-Christophe, 41100 Saint-Ouen (FR)
(74) Mandataire: Michelet, Alain

(56) Documents cités:
- EP-A- 0 315 823
- DE-A- 3 339 926
- US-A- 3 665 777

## Description

La présente invention appartient au domaine technique des équipements pour véhicules automobiles et concerne plus particulièrement une colonne de direction réglable en profondeur du type défini dans le préambule de la revendication 1 et connu par exemple du document EP-A-0 315 823.

L'amélioration des prestations offertes par les constructeurs amène à une évolution, non seulement des performances techniques des véhicules, mais aussi de celle du confort de ses occupants, et tout spécialement du conducteur. Le développement du concept de poste de pilotage conduit à pouvoir adapter la géométrie de l'habitacle intérieur à la morphologie du conducteur, et donc à améliorer l'ergonomie de ce poste, où le volant a une place importante. Le système de réglage de la position du volant est alors généralement reporté au niveau de la colonne de direction.

Une des difficultés rencontrées lors de la réalisation d'un système de réglage en profondeur d'une colonne de direction réside dans la recherche d'un compromis entre l'effort de coulissement qui doit être faible et le jeu du système , lequel doit être le plus réduit possible, pour ne pas être sensible au niveau du volant. Ce compromis conduit généralement les fabricants de colonnes de direction à réaliser un système de guidage utilisant des technologies qui permettent des ajustements précis entre les pièces en mouvement. Mais les solutions techniques connues présentent l'inconvénient d'être généralement onéreuses.

Dans le cas d'une colonne de direction réglable en profondeur, dans laquelle l'arbre de colonne est disposé dans un tube-corps, celui-ci participe au guidage du déplacement. Le tube-corps peut être constitué en une seule pièce, et dans ce cas, le porte à faux de la partie de l'arbre sur laquelle se fixe le volant, varie en fonction de la position de réglage.

Le tube-corps peut également être composé de deux éléments tubulaires coulissant l'un dans l'autre, comme décrit dans le brevet FR-2.662.986 de la demanderesse. Dans cette réalisation, les pièces en mouvement du tube-corps sont réalisées avec des ajustements permettant d'aboutir à un compromis entre l'effort de coulissement et le jeu du système de réglage.

Le document EP-0.315.823 décrit également une colonne de direction réglable en profondeur, pour véhicule automobile, dans laquelle le tube-corps comprend deux tubes coulissant l'un dans l'autre. Dans cette colonne, un fourreau est disposé entre les deux tubes de façon à maintenir leur position relative et à rigidifier leur assemblage.

Il est cependant souhaitable d'améliorer encore les systèmes existants et notamment d'en diminuer le prix, à performances égales.

Le document DE-A-33.39.926 décrit une colonne de direction de sécurité comprenant des parties axiales respectivement externe et interne à sections transverses non circulaires, reliées de manière télescopique. Un élément élastique avec des surfaces ondulées est interposé entre les deux parties. L'élément élastique comprend deux flancs positionnés à angle droit, enveloppant partiellement la partie interne, ainsi qu'une saillie flexible sur l'un des deux flancs, s'engageant dans une ouverture de la partie externe pour maintenir l'élément élastique en position. La présence de l'élément élastique permet d'éliminer le jeu entre les parties et de prédéterminer l'effort axial nécessaire pour provoquer un mouvement télescopique des deux parties en cas de choc.

Le document US-A-3.665.777 décrit un assemblage de colonne de direction comprenant un manchon extérieur d'absorption d'énergie et un arbre de direction télescopiquement repliable dans le manchon extérieur. Des éléments élastiques de frottement sont disposés dans des rainures pratiquées dans l'arbre intérieur. Ils empêchent des vibrations audibles entre les composants télescopiques.

Le but de l'invention est une colonne de direction réglable en profondeur dont la conception permet une plus grande tolérance dimensionnelle des pièces en mouvement, facilitant le montage et la fabrication, et de ce fait permettant de diminuer les coûts.

Un autre but de l'invention est encore d'améliorer le confort de l'utilisateur et de permettre le réglage en profondeur de la colonne de direction avec un faible effort, et cela sans sensation de jeu.

L'invention s'applique à une colonne de direction réglable en profondeur, pour véhicule automobile, dont l'arbre est disposé dans un tube-corps comprenant deux tubes coulissant l'un dans l'autre, un fourreau étant disposé entre les deux tubes.

Selon l'invention, le fourreau comporte des éléments en saillie, flexibles en direction radiale, venant en contact avec au moins l'un des tubes, les éléments en saillie étant orientés longitudinalement, à savoir sensiblement parallèlement à l'axe des tubes.

Les éléments en saillie permettent, d'une part, d'amortir le jeu radial entre les deux tubes du tube-corps et donc d'éviter les sensations de jeu au niveau du volant et, d'autre part, de diminuer les surfaces en contact entre les deux tubes, et ainsi de limiter les efforts nécessaires pour le déplacement relatif entre les deux tubes, lors du réglage en profondeur de la colonne de direction. Le fourreau participe ainsi directement à l'amélioration du confort de l'utilisateur.

Dans différents modes de réalisation particuliers, l'invention comporte en outre les caractéristiques suivantes, prises isolément ou selon leurs combinaisons telles que définies par les Formules de rattachement des revendications dépendantes:
- le fourreau comporte des éléments en saillie venant en contact avec les deux tubes;
- le fourreau comporte un plot destiné à être engagé dans une ouverture aménagée sur l'un des tubes de façon à maintenir le fourreau en position,
- à l'une de ses extrémités, le fourreau comprend une collerette venant en butée contre le tube extérieur lors de sa mise en place,
- le fourreau est en matière plastique, en particulier thermoplastique,
- un matériau anti-friction est ajouté à la matière constitutive du fourreau ou interposé entre le fourreau et les tubes au moins au voisinage des éléments en saillie,
- les éléments en saillie sont des languettes flexibles,
- le fourreau comprend deux séries de languettes flexibles, disposées respectivement au voisinage des extrémités du fourreau,
- chaque languette comprend une branche inclinée vis-à-vis de l'axe de la colonne de direction, et dont l'extrémité libre vient en contact avec un des deux tubes,
- la branche inclinée d'une languette forme avec l'axe de la colonne de direction, un angle compris entre 5 et 45°, de préférence sensiblement égal à 15°,
- le fourreau comporte une âme de laquelle part chacune des languettes, chaque languette comprenant deux branches, une extrémité de la première branche étant reliée à l'âme du fourreau, et l'autre extrémité étant reliée à une extrémité de la deuxième branche, l'autre extrémité de la deuxième branche étant libre, lesdites première et deuxième branches étant disposées en formant un V ouvert dont la pointe vient en contact avec l'un des tubes, l'extrémité libre de la deuxième branche venant en contact avec l'autre tube,
- le fourreau est fendu dans le sens longitudinal,
- les éléments en saillie, orientés longitudinalement, sont réalisés en conférant au fourreau une section généralement ondulée ou cannelée, les zones situées au sommets des ondulations ou cannelures entrant en contact avec les tubes du tube-corps en assurant des surfaces de contact sensiblement linéaires, disposées parallèlement à l'axe des tubes, tandis que les zones de liaison entre les zones de sommets sont déformables, procurant une flexibilité radiale.

Divers caractéristiques et avantages de l'invention ressortiront de la description suivante, donnée à titre d'exemple et sans caractère limitatif, en regard des dessins annexés sur lesquels:
La Figure 1 est une perspective illustrant un tube-corps de colonne de direction auquel l'invention peut être appliquée.
La Figure 2 est une perspective avec arrachement partiel d'un mode de réalisation d'un fourreau destiné à être disposé entre les deux tubes du tube-corps.
La Figure 3 représente, en coupe transversale selon le plan III-III de la Figure 4C, réalisée au niveau des extrémités d'une des séries de languettes, un fourreau mis en place entre les deux tubes du tube-corps.
Les Figures 4A, 4B et 4C représentent les étapes successives de la mise en place du fourreau entre les deux tubes,

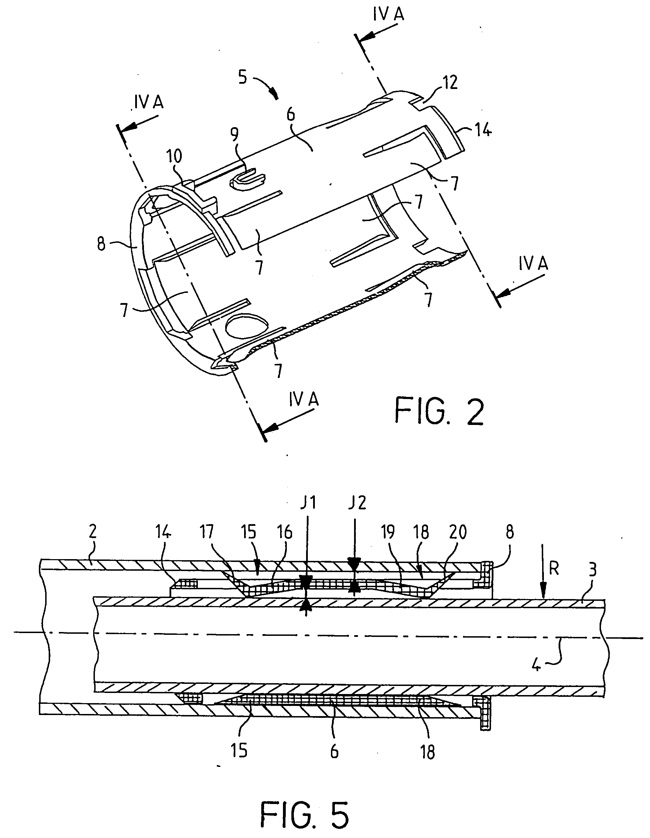

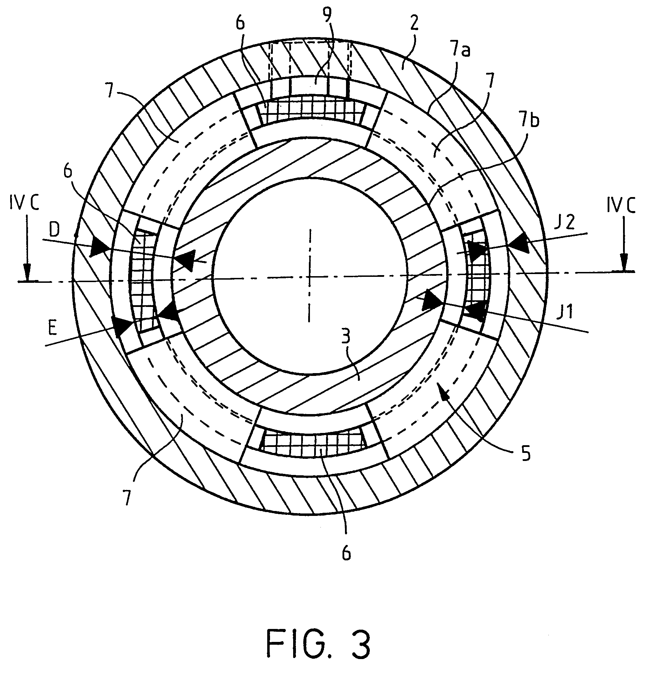

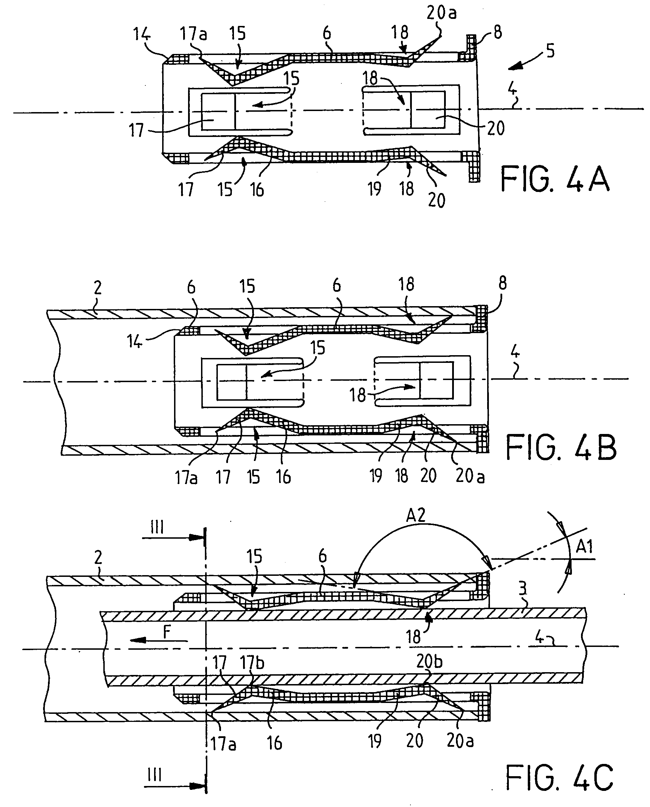

la Figure 4A étant une coupe axiale du fourreau seul selon le plan IVA-IVA de la Figure 2, et la figure 4C étant une coupe axiale du fourreau, occupant sa position finale entre les deux tubes du tube-corps, selon le plan IVC-IVC de la Figure 3, tandis que la figure 4B est une coupe similaire illustrant une position intermédiaire du fourreau.

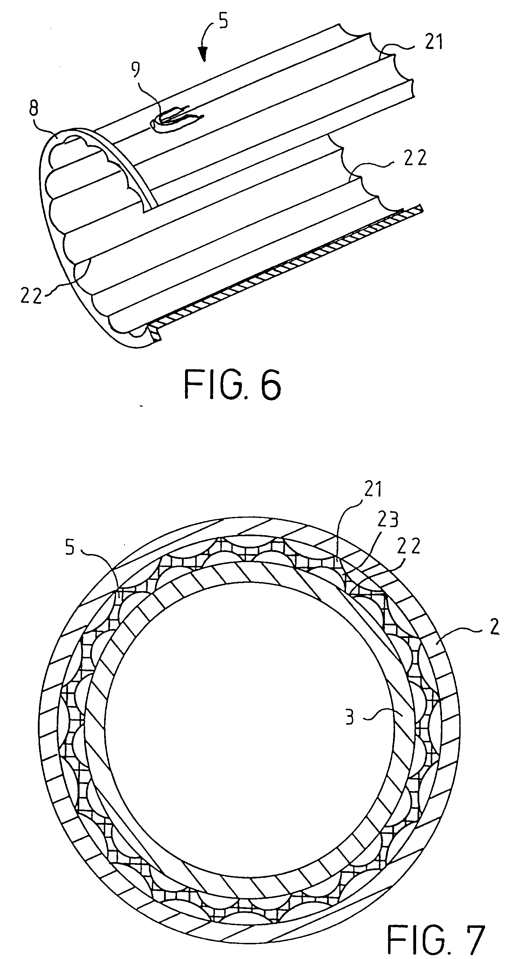

La Figure 5 est une coupe axiale représentant la configuration du fourreau dans le cas d'un effort radial exercé sur l'un des tubes du tube-corps.
La Figure 6 est une perspective avec arrachement partiel d'un autre mode de réalisation d'un fourreau destiné à être disposé entre les deux tubes du tube-corps.
La Figure 7 représente d'une manière analogue à la Figure 3 une coupe transversale du fourreau selon la Figure 6 et mis en place entre les deux tubes du tube-corps.

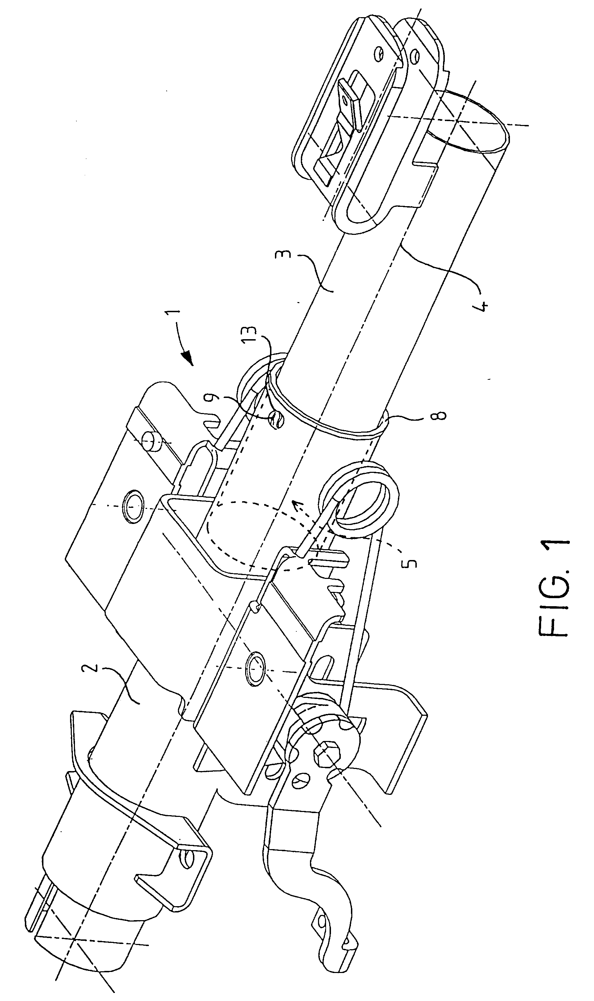

Comme on peut le voir sur les Figures 1 et 3 ou 7, le tube-corps 1 de colonne de direction comprend deux tubes 2 et 3 coulissant l'un dans l'autre le long de l'axe 4 de la colonne. Un fourreau 5 (représenté schématiquement en pointillés à la Figure 1) est disposé entre le tube extérieur 2 et le tube intérieur 3. Un plot 9 aménagé sur le fourreau 5 vient s'introduire dans une ouverture 13, aménagée dans le tube 2 de façon à maintenir le fourreau en position.

Un premier mode de réalisation du fourreau 5 est représenté à la Figure 2. Il constitue un ensemble monobloc généralement cylindrique de section correspondant sensiblement à celle des tubes 2 et 3.

Le fourreau 5 comprend à l'une de ses extrémités une collerette 8, venant en butée contre le tube extérieur 2 lors de sa mise en place, facilitant ainsi l'introduction et l'extraction du fourreau 5.

Contre cette collerette 8 est également prévue une saillie 10 destinée à faciliter l'orientation de la pièce lors de son montage.

L'autre extrémité du fourreau 5 est chanfreinée, de façon à constituer une rampe 14 facilitant l'introduction du fourreau dans le tube extérieur 2.

Sur cette extrémité sont également aménagées deux encoches 12 destinées à faciliter l'orientation de la pièce lors de son montage.

On voit aussi sur la Figure 2 le plot 9 aménagé sur l'âme 6 du fourreau 5 et destiné à s'insérer au montage dans l'ouverture 13 du tube extérieur 2.

Selon l'invention, le fourreau 5 comprend des éléments en saillie venant en contact avec au moins l'un des tubes. Les éléments en saillie sont des languettes flexibles 7 aménagées à chacune des extrémités du fourreau 5. Dans ce mode de réalisation, les languettes 7 sont disposées de façon symétrique, c'est-à-dire disposées par paires à chaque extrémité du fourreau 5. Elles sont réparties régulièrement autour du fourreau 5, les Figures 2 et 3 montrant deux séries de quatre languettes 7 prévues à chaque extrémité.

La Figure 3 montre l'espace D ménagé entre le diamètre extérieur du tube intérieur 3 et le diamètre intérieur du tube extérieur 2. Le fourreau 5 est inséré dans cet espace D.

L'épaisseur E du fourreau 5, assimilable à l'épaisseur de son âme 6, ne remplit pas la totalité de l'espace D. Il existe donc un jeu J1 entre le fourreau 5 et le tube intérieur 3, et un jeu J2 entre le fourreau 5 et le tube extérieur 2. Chacun de ces jeux J1, J2 est déterminé de façon à absorber les variations dimensionnelles, résultant de la fabrication du fourreau 5 et des tubes 2, 3.

Chacune des languettes 7 possède une partie inclinée par rapport à l'axe 4 de la colonne de direction, et conformée de façon à réaliser une surface 7a en contact avec le tube extérieur 2 et une surface 7b en contact avec le tube intérieur 3.

Ces surfaces de contact 7a et 7b sont continues. Dans la réalisation représentée à la Figure 3, les tubes 2, 3 sont cylindriques, et les surfaces 7a, 7b de contact correspondent à des surfaces courbes.

Les surfaces en contact sont ainsi suffisamment importantes pour éviter un phénomène d'usure prématurée des languettes. Elles restent néanmoins assez faibles et en tout cas nettement inférieures à la surface en vis à vis des deux tubes 2 et 3.

Plus particulièrement, comme illustré aux Figures 4A, 4B, 4C et 5, le fourreau 5 comprend une série de languettes avant 15, aménagées du côté du chanfrein ou rampe 14 et une série de languettes arrière 18 aménagées vers l'extrémité du fourreau 5 comprenant la collerette 8.

Chaque languette 15, 18 comporte deux branches respectivement 16, 17 et 19, 20 formant un V ouvert dont l'angle intérieur A2 est par exemple compris entre 135 et 175°.

A l'une de ses extrémités, la première branche 16, 19 part de l'âme du fourreau 5, et son autre extrémité est reliée à la seconde branche 17, 20. La seconde branche 17, 20 est donc reliée par une extrémité 17b, 20b à la première branche 16, 19. Cette extrémité 17b, 20b correspond à la pointe du V formé par les deux branches 16, 17 et 19, 20. L'autre extrémité 17a, 20a de la seconde branche 17, 20 est libre, c'est-à-dire non liée au corps du fourreau 5, procurant ainsi une flexibilité dans le sens radial.

Avantageusement, la première branche 16, 19 a une épaisseur sensiblement constante et égale - ou inférieure par exemple de moitié - à l'épaisseur de l'âme 6 du fourreau 5. L'épaisseur de la deuxième branche 17, 20 diminue en allant vers son extrémité libre 17a, 20a.

La branche libre 17, 20 est sensiblement plus courte que la branche 16, 19 rattachée au corps 6 du fourreau 5.

Dans une réalisation concrète, la première branche 16, 19 est approximativement alignée avec le corps du fourreau 5. La branche libre 17, 20 fait un angle A1 avec l'axe 4 commun au fourreau 5 et à la colonne. Avantageusement l'angle A1 est compris entre 5 et 45°, de préférence sensiblement égal à 15°.

Au repos, tel que représenté aux Figures 4A et 2, et hors de toute contrainte, les extrémités libres 17a, 20a définissent des cercles de diamètres différents. Les extrémités libres 17a des languettes avant 15 sont situées sur un cercle de diamètre inférieur au diamètre extérieur de l'âme 6 du fourreau 5. De cette façon, l'extrémité libre 17a des languettes avant 15 est masquée, lors de l'introduction dans les tubes, par la partie avant du fourreau 5 comportant la rampe inclinée 14.

Les extrémités libres 20a des languettes arrière 18 sont situées sur un cercle de diamètre supérieur au diamètre extérieur de l'âme 6 du fourreau 5.

Comme l'illustre la Figure 4B, on introduit le fourreau 5 à l'intérieur du tube extérieur 2, en présentant d'abord la face chanfreinée 14. Les languettes avant 15 sont alors masquées derrière ce chanfrein, ce qui permet d'éviter tout phénomène d'accrochage et de détérioration des languettes.

En cours d'introduction, le tube 2 vient repousser l'extrémité libre 20a des languettes arrière 18 en les repoussant vers l'intérieur du fourreau 5. Le tube 2 vient finalement en butée contre la collerette 8 et le plot 9 s'engage dans l'ouverture 13 du tube extérieur 2.

Dans l'étape représentée à la Figure 4C, le tube intérieur 3 est introduit à l'intérieur du fourreau 5 dans le sens de la flèche F. Il vient tout d'abord en contact avec la branche 20 des languettes arrières 18. La disposition inclinée de ces branches 20 permet de constituer une rampe, facilitant l'introduction du tube 3.

Lors de la suite de son introduction, le tube 3 vient ensuite en contact avec les branches 16 solidaires de l'âme 6 du fourreau 5. La disposition légèrement inclinée de ces branches 16 constitue également une rampe de guidage facilitant l'introduction du tube intérieur 3.

Le tube 3 repousse les languettes 15, 18 radialement vers l'extérieur. Ces languettes 15, 18 sont alors comprimées ou précontraintes. Leur forme en V leur permet d'être à la fois en contact avec le tube interne 3 et le tube externe 2, respectivement par la pointe inférieure 17b, 20b du V et le bord de l'extrémité libre 17a, 20a. Les dimensions de l'âme 6 du fourreau 5 étant inférieures à l'espace intérieur compris entre les deux tubes 2 et 3, le fourreau 5 n'est en contact avec les tubes 2 et 3 que par l'intermédiaire des languettes 15 et 18.

La forme et la flexibilité des languettes 15 et 18 permettent d'absorber les efforts radiaux et de compenser les jeux ou mouvements entre les deux tubes 2 et 3. Ceux-ci peuvent ainsi coulisser l'un dans l'autre avec un faible effort axial, sans sensation de jeu radial, ce dernier étant compensé par les déformations possibles des languettes 15 et 18.

Comme le représente la Figure 5, dans le cas d'un effort radial R, celui-ci est d'abord compensé par la déformation des languettes 15 et 18. Si l'effort radial R devient important, les languettes plient jusqu'à ce que les jeux J1, J2 soient totalement compensés d'un côté et reportés sur l'autre. C'est alors l'âme 6 du fourreau 5 et au moins une partie des branches 16, 19 des languettes 15, 18 rattachées à l'âme 6 du fourreau 5 qui sont soumises à la totalité de l'effort radial R.

Un autre mode de réalisation du fourreau 5 est représenté aux Figures 6 et 7.

Ce fourreau 5 comprend comme précédemment différents moyens de positionnement, notamment une collerette 8, disposée à l'une de ses extrémités, et destinée à venir en butée contre le tube extérieur, et un plot 9.

Dans ce mode de réalisation, les éléments en saillie 21, 22 sont disposés longitudinalement sur les surfaces intérieure et extérieure du fourreau. lls sont réalisés sous forme d'ondulations ou de cannelures.

Le contact entre le fourreau 5 et les deux tubes du tube-corps est obtenu par des surfaces de contact 21, 22 sensiblement linéaires, disposées parallèlement à l'axe des tubes, et donc orientées dans le sens du déplacement relatif entre les deux tubes lors de l'opération de réglage en profondeur de la colonne de direction. Cette disposition permet de limiter l'influence des phénomènes d'usure, sur les éléments en saillie.

Ces contacts linéaires ont une longueur suffisante pour constituer un centrage long, et ainsi permettent de masquer le boitement entre les deux tubes.

La Figure 7 montre en coupe que les éléments en saillie 21, extérieurs, sont reliés aux éléments en saillie 22, intérieurs, par une zone 23 déformable. Cette zone 23 déformable confère aux éléments en saillie leur flexibilité radiale, permettant de compenser les dispersions et tolérances dimensionnelle de production des tubes 2 et 3. Cette zone 23 permet également de gérer l'effort de coulissement, en fonction des pressions de contact exercés sur les éléments en saillie 21, 22.

Les éléments en saillie 21 et 22 sont avantageusement disposés régulièrement sur la périphérie du fourreau 5.

L'invention n'est pas limitée aux détails des modes de réalisation décrits précédemment, mais en englobe toutes les variantes et moyens équivalents. Par exemple, l'invention a été décrite en référence à des tubes cylindriques, mais elle est applicable à toutes formes de tubes, ceux-ci pouvant avoir également une section ovale, carrée, rectangulaire, triangulaire, pentagonale, polygonale et d'une façon générale, toute forme géométrique régulière ou non, l'important étant de disposer d'éléments tubulaires capables de coulisser l'un dans l'autre. La section du fourreau doit alors être adaptée à la forme des tubes utilisés.

Le fourreau 5 a été présenté aux Figures 2 à 5 comme comportant deux séries de languettes 15, 18, mais un nombre différent est possible y compris d'une seule série.

Chaque série représentée aux Figures 2 à 5 comprend quatre languettes, disposée régulièrement à la périphérie du fourreau. Le nombre de languettes de chaque série peut être inférieur à quatre, notamment être égal à trois, ou également supérieur à quatre.

Les séries de languettes peuvent être décalées radialement suivant un angle non nul, voire même comporter un nombre de languettes différent d'une série à l'autre.

Les deux séries de languettes ont été présentées comme étant disposées de façon symétrique, mais cette symétrie n'est pas indispensable.

Le fourreau a été représenté dans des modes de réalisation comportant des éléments en saillie, flexibles en direction radiale et venant en contact avec les deux tubes du tube-corps.

Dans un autre mode de réalisation, le fourreau peut également être fendu dans le sens longitudinal. Cette fente permet une variation du diamètre et ainsi une adaptation à l'un des deux tubes, l'adaptation dimensionnelle à l'autre tube étant réalisée grâce à la flexibilité radiale des éléments en saillie. Dans ce mode de réalisation, avantageusement les élément en saillie viennent en contact avec le tube mobile permettant le réglage en profondeur de la colonne. Généralement le tube mobile est le tube intérieur.

Le fourreau est avantageusement réalisé en matière plastique, notamment thermoplastique, se prêtant bien au moulage par injection et à une réalisation monobloc.

Un matériau anti-friction, tel qu'une matière plastique préparée à partir du tétrafluoroéthylène du type de celle commercialisée sous la marque TEFLON (marque déposée), ou du bisulfure de molybdène, ou encore de la graisse ou de l'huile, peut être ajouté à la matière constitutive du fourreau, dans la masse ou superficiellement. Cette matière anti-friction peut également être localisée plus précisément au niveau des surfaces des éléments en saillie en contact avec les tubes 2 et 3.

Les tubes 2 et 3 sont réalisés à partir d'une tôle, par exemple d'acier ou d'aluminium, par des procédés classiques, par exemple par étirage, par roulage et soudage, ou encore par roulage puis agrafage.

L'invention a été illustrée sur une colonne de direction, telle que représentée à la Figure 1, laquelle comporte des moyens ou ensembles ne faisant pas partie à proprement parler de l'invention revendiquée, tels qu'un ensemble absorbeur d'énergie en cas de choc, des moyens de réglage angulaire, et différents moyens de fixation du tube-corps sur le châssis ou la carrosserie du véhicule.

Il est bien entendu que l'invention est applicable à tout autre type de colonne et que la Figure 1 a pour seul but de montrer comment l'invention peut être concrètement utilisée dans une colonne de direction pour véhicule automobile.

Les signes de référence insérés après les caractéristiques techniques mentionnées dans les revendications, ont pour seul but de faciliter la compréhension de ces dernières, et n'en limitent aucunement la portée.

## Revendications

1. Colonne de direction réglable en profondeur, pour véhicule automobile, dont l'arbre est disposé dans un tube-corps comprenant deux tubes (2, 3) coulissant l'un dans l'autre, un fourreau (5) étant disposé entre les deux tubes (2, 3), caractérisée en ce que le fourreau (5) comporte des éléments en saillie (7, 21, 22), flexibles en direction radiale, venant en contact avec au moins l'un des tubes (2, 3), les éléments en saillie (21, 22) étant orientés longitudinalement, à savoir sensiblement parallèlement à l'axe des tubes (2, 3).

2. Colonne de direction selon la revendication 1, caractérisée en ce que le fourreau (5) comporte des éléments en saillie (7, 21, 22) venant en contact avec les deux tubes (2, 3).

3. Colonne de direction selon l'une des revendications 1 et 2, caractérisée en ce que le fourreau (5) comporte un plot (9), destiné à être engagé dans une ouverture (13) aménagée sur l'un des tubes (2, 3) de façon à maintenir le fourreau en position.

4. Colonne de direction selon l'une des revendications 1 à 3, caractérisée en ce qu'à l'une de ses extrémités, le fourreau (5) comprend une collerette (8) venant en butée contre le tube extérieur (2) lors de sa mise en place.

5. Colonne de direction selon l'une des revendications 1 à 4, caractérisée en ce que les éléments en saillie sont des languettes (7) flexibles.

6. Colonne de direction selon l'une des revendications 1 à 5, caractérisée en ce que le fourreau (5) comprend deux séries de languettes (15, 18) flexibles disposées respectivement au voisinage des extrémités du fourreau (5).

7. Colonne de direction selon l'une des revendications 5 et 6, caractérisée en ce que chaque languette (15, 18) comprend une branche (17, 20) inclinée vis-à-vis de l'axe (4) de la colonne de direction, et dont l'extrémité libre (17a, 20a) vient en contact avec un des deux tubes (2, 3).

8. Colonne de direction selon la revendication 7, caractérisée en ce que la branche (17, 20) inclinée d'une languette (15, 18) forme avec l'axe (4) de la colonne de direction un angle (A1), compris entre 5 et 45°, de préférence sensiblement égal à 15°.

9. Colonne de direction selon l'une des revendications 5 à 8, caractérisée en ce que le fourreau (5) comporte une âme (6) de laquelle part chacune des languettes (7, 15, 18), chaque languette (15, 18) comprenant deux branches (16, 17 et 19, 20), une extrémité de la première branche (16, 19) étant reliée à l'âme (6) du fourreau (5), et l'autre extrémité étant reliée à une extrémité (17b, 20b) de la deuxième branche (17, 20), l'autre extrémité (17a, 20a) de la deuxième branche étant libre, lesdites première et deuxième branches (16, 17 et 19, 20) étant disposées en formant un V ouvert dont la pointe vient en contact avec l'un des tubes (2, 3), l'extrémité libre (17a, 20a) de la deuxième branche (17, 20) venant en contact avec l'autre tube (2, 3).

10. Colonne de direction selon l'une quelconque des revendications 1 à 4, caractérisée en ce que les éléments en saillie, orientés longitudinalement sont réalisés en conférant au fourreau une section généralement ondulée ou cannelée, les zones (21, 22) situées aux sommets des ondulations ou cannelures entrant en contact avec les tubes (2, 3) du tube-corps en assurant des surfaces de contact sensiblement linéaires, disposées parallèlement à l'axe des tubes, tandis que les zones de liaison (23) entre les zones de sommets (21, 22) sont déformables, procurant une flexibilité radiale.

11. Colonne de direction selon l'une quelconque des revendications 1 à 10, caractérisée en ce que le fourreau (5) est fendu dans le sens longitudinal.

12. Colonne de direction selon l'une des revendications 1 à 11, caractérisée en ce que le fourreau (5) est en matière plastique, en particulier thermoplastique.

13. Colonne de direction selon l'une des revendications 1 à 12, caractérisée en ce qu'un matériau anti-friction est ajouté à la matière constitutive du fourreau (5) ou interposé entre le fourreau (5) et les tubes (2, 3) au moins au voisinage des éléments en saillie (7, 21, 22).

## Claims

1. Depth-adjustable steering column, for a motor vehicle, whose shaft is disposed in a tube body including two tubes (2, 3) with one sliding into the other, a sheath (5) being disposed between the two tubes (2, 3), characterised in that the sheath (5) comprises projecting elements (7, 21, 22) which are flexible in a radial direction and come into contact with at least one of the tubes (2, 3), the projecting elements (21, 22) being orientated longitudinally, namely substantially parallel to the axis of the tubes (2, 3).

2. Steering column according to claim 1, characterised in that the sheath (5) comprises projecting elements (7, 21, 22) coming into contact with the two tubes (2, 3).

3. Steering column according to claim 1 or 2, characterised in that the sheath (5) comprises a block (9) intended to be engaged in an opening (13) formed on one of the tubes (2, 3) so as to keep the sheath in position.

4. Steering column according to any one of claims 1 to 3, characterised in that at one of its extremities, the sheath (5) includes a flange (8) abutting a stop against the outer tube (2) at the time it is placed.

5. Steering column according to any one of claims 1 to 4, characterised in that the projecting elements are flexible tongues (7).

6. Steering column according to any one of claims 1 to 5, characterised in that the sheath (5) includes two sets of flexible tongues (15, 18), respectively disposed close to the extremities of the sheath (5).

7. Steering column according to claim 5 or 6, characterised in that each tongue (15, 18) includes a branch (17, 20) slanted with respect to the axis (4) of the steering column and whose free extremity (17a, 20a) comes into contact with one of the two tubes (2, 3).

8. Steering column according to claim 7, characterised in that the slanted branch (17, 20) of a tongue (15, 18) forms along with the axis (4) of the steering column an angle (A1) of between 5 and 45° and preferably equal to about 15°.

9. Steering column according to any one of claims 5 to 8, characterised in that the sheath (5) comprises a core (6) from which each of the tongues (7, 15, 18) extends, each tongue (15, 18) including two branches (16, 17 and 19, 20), one extremity of the first branch (16, 19) being connected to the core (6) of the sheath (5) and the other extremity being connected to one extremity (17b, 20b) of the second branch (17, 20), the other extremity (17a, 20a) of the second branch being free, said first and second branches (16, 17 and 19, 20) being disposed so as to form an open V whose apex comes into contact with one of the tubes (2, 3), the free extremity (17a, 20a) of the second branch (17, 20) coming into contact with the other tube (2, 3).

10. Steering column according to any one of 1 to 4 claims characterised in that the longitudinally orientated projecting elements are embodied by providing the sheath with a generally undulated or ridged section, the zones (21, 22) situated at the tops of the undulations or ridges entering into contact with the tubes (2, 3) of the tube body, thus providing substantially linear contact surfaces disposed parallel to the axis of the tubes, whereas the linking zones (23) between the top zones (21, 22) are deformable, producing a radial flexibility.

11. Steering column according to any one of claims 1 to 10, characterised in that the sheath (5) is slit in the longitudinal direction.

12. Steering column according to any one of claims 1 to 11 characterised in that the sheath (5) is made of plastics and in particular of a thermoplastic material.

13. Steering column according to any one of claims 1 to 12, characterised in that an antifriction material is added to the material constituting the sheath (5) or inserted between the sheath (5) and the tubes (2, 3), at least close to the projecting elements (7, 21, 22).

## Patentansprüche

1. Tiefenverstellbare Lenksäule für Automobile, deren Lenkwelle in einem Rohrkörper angeordnet ist, der zwei ineinander gleitende Rohre (2, 3) aufweist, wobei eine Hülse (5) zwischen den beiden Rohren (2, 3) angeordnet ist, dadurch gekennzeichnet, daß die Hülse (5) in radialer Richtung flexible vorspringende Elemente (7, 21, 22) aufweist, die wenigstens eines der Rohre (2, 3) berühren, wobei die vorspringenden Elemente (21, 22) in Längsrichtung, nämlich im wesentlichen parallel zur Achse der Rohre (2, 3) ausgerichtet sind.

2. Lenksäule nach Anspruch 1, dadurch gekennzeichnet, daß die Hülse (5) vorspringende Elemente (7, 21, 22) aufweist, die beide Rohre (2, 3) berühren.

3. Lenksäule nach einem der Ansprüche 1 und 2, dadurch gekennzeichnet, daß die Hülse (5) einen Stift (9) aufweist, der zum Eingriff in eine Öffnung (13) in einem der Rohre (2, 3) ausgebildet ist, um die Hülse in ihrer Position zu halten.

4. Lenksäule nach einem der Ansprüche 1 bis 3, dadurch gekennzeichnet, daß die Hülse (5) an einem ihrer Enden einen Kragen (8) aufweist, der bei Anbringen desselben an dem äußeren Rohr (2) zur Anlage kommt.

5. Lenksäule nach einem der Ansprüche 1 bis 4, dadurch gekennzeichnet, daß die vorspringenden Elemente flexible Zungen (7) sind.

6. Lenksäule nach einem der Ansprüche 1 bis 5, dadurch gekennzeichnet, daß die Hülse (5) zwei Reihen von flexiblen Zungen (15, 18) aufweist, die jeweils den Enden der Hülse (5) benachbart angeordnet sind.

7. Lenksäule nach einem der Ansprüche 5 und 6, dadurch gekennzeichnet, daß jede Zunge (15, 18) einen in Richtung der Achse (4) der Lenksäule schrägen Arm (17, 20) aufweist, dessen freies Ende (17a, 20a) eines der beiden Rohre (2, 3) berührt.

8. Lenksäule nach Anspruch 7, dadurch gekennzeichnet, daß der schräge Arm (17, 20) einer Zunge (15, 18) mit der Achse (4) der Lenksäule einen Winkel (A1) zwischen 5 und 45°, vorzugsweise im wesentlichen gleich 15° bildet.

9. Lenksäule nach einem der Ansprüche 5 bis 8, dadurch gekennzeichnet, daß die Hülse (5) einen Kern (6) aufweist, von dem jede der Zungen (7, 15, 18) absteht, wobei jede der Zungen (15, 18) zwei Arme (16, 17 und 19, 20) aufweist ein Ende des ersten Arms (16, 19) mit dem Kern (6) der Hülse (5) und das andere Ende mit einem Ende (17b, 20b) des zweiten Arms (17, 20) verbunden ist, das andere Ende (17a, 20a) des zweiten Arms frei ist, der erste und der zweite Arm (16, 17 und 19, 20) in Form eines offenen V angeordnet sind, dessen Spitze eines der Rohre (2, 3) berührt, und das freie Ende (17a, 20a) des zweiten Arms (17, 10) das andere Rohr (2, 3) berührt.

10. Lenksäule nach einem der Ansprüche 1 bis 4, dadurch gekennzeichnet, daß die in Längsrichtung ausgerichteten vorspringenden Elemente derart abgebildet sind, daß sie der Hülse einen im wesentlichen welligen oder gerillten Querschnitt verleihen, wobei die an den Spitzen der Wellen oder Rillen befindlichen Zonen (21, 22) die Rohre (2, 3) des Rohrkörpers berühren, indem sie im wesentlichen lineare Kontaktflächen bilden, die parallel zur Achse der Rohre angeordnet sind, während die Verbindungszonen (23) zwischen den Spitzenzonen (21, 22) verformbar sind und radiale Flexibilität bewirken.

11. Lenksäule nach einem der Ansprüche 1 bis 10, dadurch gekennzeichnet, daß die Hülse (5) in Längsrichtung eingeschnitten ist.

12. Lenksäule nach einem der Ansprüche 1 bis 11, dadurch gekennzeichnet, daß die Hülse (5) aus Kunststoff, insbesondere einem Thermoplast, besteht.

13. Lenksäule nach einem der Ansprüche 1 bis 12, dadurch gekennzeichnet, daß ein reibungsminderndes Material dem Grundmaterial der Hülse (5) beigefügt oder wenigstens nahe den vorspringenden Elementen (7, 21, 22) zwischen der Hülse (5) und den Rohren (2, 3) angeordnet ist.
